# EUROPEAN PATENT SPECIFICATION

(11) **EP 4 634 028 B1**
(45) Date of publication and mention of the grant of the patent: **11.11.2026**
(21) Application number: 23832975.9
(22) Date of filing: 12.12.2023
(51) Int. Cl.: B60W 60/00, B60W 30/095

(54) **METHOD FOR OPERATING A DRIVER ASSISTANCE SYSTEM, DRIVER ASSISTANCE SYSTEM AND MOTOR VEHICLE WITH A DRIVER ASSISTANCE SYSTEM TO FREE THE DRIVING SPACE WITH BLOCKING VEHICLES**
VERFAHREN ZUM BETREIBEN EINES FAHRERASSISTENZSYSTEMS, FAHRERASSISTENZSYSTEM UND KRAFTFAHRZEUG MIT EINEM FAHRERASSISTENZSYSTEM ZUR BEFREIUNG DES FAHRRAUMS MIT BLOCKIERENDEN FAHRZEUGEN
PROCÉDÉ POUR FAIRE FONCTIONNER UN SYSTÈME D'AIDE À LA CONDUITE, SYSTÈME D'AIDE À LA CONDUITE ET VÉHICULE À MOTEUR COMPRENANT UN SYSTÈME D'AIDE À LA CONDUITE POUR LIBÉRER L'ESPACE DE CONDUITE OCCUPÉ PAR DES VÉHICULES BLOQUANTS

(30) Priority: 12.12.2022 DE 102022132966
(43) Date of publication of application: 22.10.2025
(73) Proprietor: Valeo Schalter und Sensoren GmbH, 74321 Bietigheim-Bissingen (DE)
(72) Inventor: JEANNE, Axel, 94000 Creteil (FR); DOUCET, Emmanuel, 94000 Creteil (FR); ALSAYED, Zayed, 94000 Creteil (FR); GARRIDO CARPIO, Fernando, 94000 Creteil (FR)
(74) Representative: Jauregui Urbahn, Kristian
(86) International application number: PCT/EP2023/085258
(87) International publication number: WO 2024/126440

(56) References cited:
- DE-A1- 102017 218 536
- DE-A1- 102018 122 929
- US-B1- 11 355 011

## Description

The invention is directed at a method for operating a driver assistance system, at a driver assistance system, which is designed to be operated according to the method, and at a motor vehicle equipped with such a driver assistance system.

It is a known problem that vehicles may block passageways of other vehicles or traffic participants, for example by double parking. In order to prevent such a blocking, it is known to equip vehicles with sensors, which are designed to autonomously detect the blocking. The detection may be triggered by a request sent from a blocked vehicle or by the blocking vehicle observing its surroundings and detecting the blocked vehicle itself. If a blocking is detected, a driver assistance system of the vehicle can perform an evasive maneuver in order to autonomously remove the vehicle and to free the blocked passageway.

Known solutions in this context are for example disclosed in DE 10 2019 134 309 A1, US 2015/0039213 A1 and US 2021/0024055 A1.

According to the known solutions, the vehicle has to carry out extensive and permanent supervision of its surroundings in order to determine whether it is currently blocking other vehicles, as it cannot rely on the potentially blocked vehicles to be able to actively transmit an unblocking request. The permanent and extensive supervision requires corresponding computing devices and capacity in the vehicle.

US 11 355 011 B1 discloses a vehicle adjustment system including one or more processors configured to receive data from one or more sensors coupled to a vehicle that is in a stationary position. The one or more processors are also configured to analyze the data to determine whether an object is within a buffer zone surrounding the vehicle while the vehicle is in the stationary position. In response to determining that the object is within the buffer zone while the vehicle is in the stationary position, the one or more processors are configured to provide control signals to one or more driving components of the vehicle to reposition the vehicle to an alternate position.

DE 10 2017 218536 A1 discloses a method for automated and/or remote-controlled movement of a driverless first vehicle longitudinally after it has been parked in a position and orientation such that it blocks an adjacent area/and or vehicle, wherein the method comprises the steps of acquiring a request from outside the first vehicle to move the first vehicle from its current position longitudinally, and depending on this, automated and/or remote-controlled longitudinal movement of the first vehicle to release the blocked adjacent area and/or the blocked vehicle.

DE 10 2018 122929 A1 discloses a method for detecting a collision-free section of a travel path of a vehicle, comprising the steps of monitoring an area in the front of the vehicle in the direction of travel using environmental sensors, determining an object in the area, and determining a steering-wheel angle range within possible angles, in which a collision between vehicle and object is avoided, as a collision-free section.

It is an object of the present invention to provide an efficient method of removing vehicles from blocked passageways.

This object is solved by the subject matter of the independent claims. Advantageous embodiments of the invention are described by the dependent claims, the following description and the figures.

The invention provides a method for operating a driver assistance system, the system comprising a sensor unit with at least one sensor, a communication unit and a conflict detection unit.

The at least one sensor, which can be a camera sensor, a radar sensor, a lidar sensor or the like, captures object data, which describe at least one object within an area surrounding the vehicle. In other words, the vehicle is equipped with at least one sensor, which is designed to capture the object data. The captured object data can be transferred to a computing unit, wherein the computing unit can be designed to execute an object recognition routine using known object recognition algorithms in order to recognize the object based on the object data.

The object can be a mobile object, like another traffic participant, for example another vehicle. The object may also be a stationary or fixed object, for example an infrastructure component, preferably a traffic sign, such as a no parking sign, or a parking gate in front of a parking lot. The object data may describe a content, a current state of the object, or a current action of the object. If the object is another vehicle, the object data may describe a movement of the vehicle. If the object is for example a parking gate in front of a parking lot, the object data may describe a state of the gate, for example, whether the gate is open or closed or if the gate is currently opening or closing. If the object is a traffic sign, the object data can describe its content.

Additionally or alternatively, the communication unit receives a communication signal from the at least one object, wherein the communication signal describes a planned maneuver of the at least one object in the area surrounding the vehicle. The communication signal can for example describe whether the parking gate is about to open or about to close. The communication signal can also describe a planned driving maneuver of another vehicle. In other words, the object data and/or the communication signal may describe a structure of a current driving space of the vehicle.

The object data and/or the communication signal are then transferred to the conflict detection unit. According to the invention, the conflict detection unit defines a current conflict area surrounding the vehicle, wherein a size and an outline of the current conflict area are defined at least partially based on the object data and/or on the communication signal. In other words, the conflict detection unit receives the object data and/or the communication signal and is able to infer from the object data and/or from the communication signal the current conflict area, which is an area where potential conflicts between the vehicle and the object can occur. In other words, the size and the outline of the current conflict area depend on the structure of the driving space in which the vehicle is currently located. Thus, the current conflict area can cover a wider area surrounding the vehicle, if the structure of the driving space results in a high blocking potential of the vehicle. On the other hand, the current conflict area can be smaller, if the driving space does not offer much blocking potential. In other words, the current conflict area is not fixed, but is adjustable based on the blocking potential of the vehicle in the current driving space.

The conflict detection unit detects a potential conflict based on a current position of the at least one object with regard to the current conflict area and/or based on the planned maneuver of the at least one object. In other words, a potential conflict can be detected, if the object comes closer to the outline of the current conflict area than a predetermined threshold, for example closer than five meters. The potential conflict can also be detected upon crossing of the outline of the current conflict area by the other vehicle. The potential conflict can also be detected, if the captured parking gate opens, thus signaling that another traffic participant is about to leave the parking lot.

Upon detection of the potential conflict, an evasive trajectory for the vehicle leading out of the current conflict area to an evasive area is determined. This can be done based on a recognition of the surrounding driving space by the vehicle sensors. In other words, the vehicle can acquire information about its surroundings using a variety of sensors, thus being able to plan its evasive trajectory. Preferably, the vehicle may have stored information about its surroundings, for example in the form of map data, which enables the vehicle to plan the evasive trajectory without having to rely on the acquisition of information by its sensors or in addition to the sensor information. From the map data, possible evasive areas can be known to the vehicle. An evasive area may be a close by parking space.

Finally, control means of the vehicle are actuated to automatically or autonomously maneuver the vehicle along the evasive trajectory to the evasive area.

The area, which has to be observed by the vehicle in order to detect a potential blocking, is reduced to the size of the current conflict area. The current conflict area is dynamically adjustable to the structure of the driving space surrounding the vehicle. In other words, the vehicle only has to supervise or observe its current conflict area to be prepared for potential conflicts and not wide areas of its surroundings. Thus, the inventive method provides an effective way for avoiding a blocking of other traffic participants by the vehicle.

The current conflict area and/or the evasive area are defined at least partially based on map data, which describe the surrounding area of the vehicle. The map data can contain information about the driving space, for example information regarding parking lots in the driving space. The use of map data, which can be stored in a storage unit of the driver assistance system, is advantageous in that the vehicle does not need to acquire the information about the driving space via its sensors.

According to the invention, the object data and/or the communication signal comprise an urgency information, which describes a level of urgency associated with the at least one object. For example, the object can be an ambulance, which is approaching the vehicle. The ambulance may have a higher level of urgency than an average traffic participant. The object can also be a parking gate in front of a hospital, which has a higher level of urgency, than the parking gate of an average parking lot. According to the invention, a blocking score is assigned to the at least one object at least partially based on the level of urgency. In other words, the ambulance is assigned a higher blocking score than the average traffic participant. The blocking score is then used to further adapt or adjust the size and the outline of the current conflict area. In other words, the higher the blocking score, the larger the conflict area. This further increases the efficiency of the proposed method, as the conflict area can be individually adapted or adjusted to the currently blocked object.

Preferably, the blocking score is determined at least partially based on the planned maneuver of the at least one object. If the object, for example the ambulance, does not plan to come close to the vehicle, the blocking score of the ambulance may again be decreased.

Preferably, the driver assistance system may also determine the evasive trajectory and/or the evasive area at least partially based on the blocking score. For example, the vehicle may use areas as evasive areas, which are normally off limits. This can be a sidewalk or a no parking zone. In other words, to unblock the ambulance, which has a high blocking score, the vehicle may choose evasive trajectories and evasive areas where driving is normally forbidden.

As explained, the at least one object can be another traffic participant, like another vehicle, a pedestrian or a cyclist. The object may also be an infrastructure component, like a parking gate or a no parking sign.

According to a further embodiment, the driver assistance system transmits a message to an external communication device about the maneuver along the evasive trajectory. This may be done based on an extent of the evading maneuver. In other words, a minor relocation of the vehicle, for example a few meters, may not be communicated to the external device, whereas a major maneuver, for example a drive around the block, may be communicated to the external device. Also, coordinates of the evasive area may be communicated to the external device in order to inform the driver about the new location of the vehicle.

According to a further embodiment, the driver assistance system triggers the definition of the current conflict area only after the vehicle has completed a parking maneuver and/or only after a driver has left the vehicle. The definition of the current conflict area may also be triggered by the driver himself, for example via an HMI (HMI - human machine interface) of the vehicle.

The invention is also directed at a driver assistance system, which is designed to be operated according to the inventive method and to a vehicle comprising such a driver assistance system.

The advantages and preferred embodiments described for the method according to the invention also apply to the driver assistance system and/or the vehicle according to the invention and vice versa.

The features and feature combinations mentioned above in the description as well as the features and feature combinations mentioned below in the description of figures and/or shown in the figures alone are usable not only in the respectively specified combination, but also in other combinations without departing from the scope of the invention. Thus, implementations are also to be considered as encompassed and disclosed by the invention, which are not explicitly shown in the figures and explained, but arise from and can be generated by separated feature combinations from the explained implementations or embodiments. Implementations and feature combinations are also to be considered as disclosed, which thus do not comprise all of the features of an originally formulated independent claim. Moreover, implementations and feature combinations are to be considered as disclosed, in particular by the implementations set out above, which extend beyond or deviate from the feature combinations set out in the relations of the claims.

Further features of the invention are apparent from the claims, the figures and the description of figures. The figures show:
- Fig. 1: a schematic view of a motor vehicle with a driver assistance system;
- Fig. 2: a schematic view of a first blocking scenario;
- Fig. 3: a schematic view of a further blocking scenario;
- Fig. 4: a schematic view of a further blocking scenario with the vehicle blocking a high urgency vehicle;
- Fig. 5: a schematic view of a further blocking scenario;
- Fig. 6: a schematic view of a method of operating a driver assistance system according to a preferred embodiment of the present invention.

In the figures, identical or functionally identical elements are marked with identical reference signs.

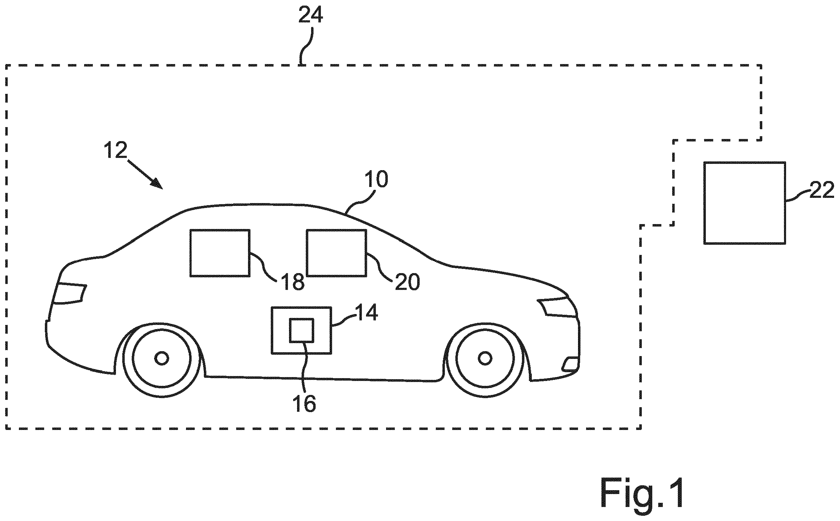

Fig. 1 shows a schematic view of a motor vehicle 10, which is equipped with a driver assistance system 12. The driver assistant the system may comprise a sensor unit 14 with at least one sensor 16, a communication unit 18 and a conflict detection unit 20. The sensor 16 may be a camera sensor, a radar sensor, a lidar sensor or the like. The sensor unit 14 may be designed to capture, via the at least one sensor 16, object data describing an object 22 in an area surrounding the vehicle 10. The object 22 may be a mobile object, like another traffic participant, or stationary, like a parking gate in front of a parking lot.

The communication unit 18 may be able to establish a communication connection with the object 22, for example on the basis of known wireless communication techniques, for example a Car-to-Car communication. Thus, the communication unit 18 may receive a communication signal from the object 22, wherein the communication signal may describe a planned maneuver of the object 22. The planned maneuver may comprise a planned driving maneuver of the object 22 or a planned opening or closing maneuver of the object 22, in case the object 22 is a parking gate.

The conflict detection unit 20 may define a current conflict area 24 at least partially surrounding the vehicle 10 and/or the object 22, wherein a size and an outline of the current conflict area 24 are defined at least partially based on the object data and/or on the communication signal.

The conflict detection unit 20 may further detect a potential conflict between the vehicle 10 and the object 22 based on a current position of the object 22 with regard to the current conflict area 24 and/or based on the planned maneuver of the object 22.

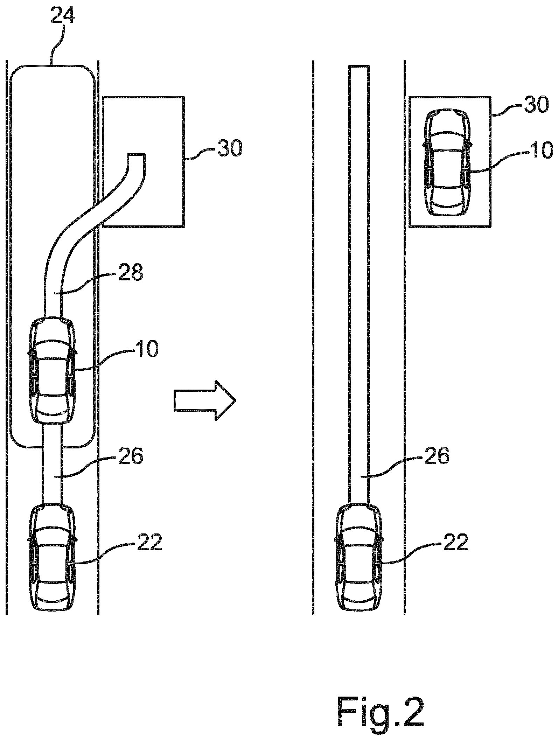

Fig. 2 to 5 show schematic views of such potential conflict situations between the vehicle 10 and the object 22, wherein the object 22 is realized as another vehicle 22.

Fig. 2 shows a situation, where the vehicle 10 is blocking the driveway or the planned driving trajectory 26 of the other vehicle 22. The vehicle 10 may capture object data of the other vehicle 22, for example using rear camera sensors 16 and/or receive a communication signal from the other vehicle 22 and define the current conflict area 24 based on the object data and/or the communication signal.

As the other vehicle 22 is approaching the vehicle 10, it changes its position with regard to the current conflict area 24. This may lead the conflict detection unit 20 to detect a potential conflict between the vehicles 10, 22. Upon detection of the potential conflict, an evasive trajectory 28 for the vehicle 10 leading out of the current conflict area 24 to an evasive area 30 may be determined and control means of the vehicle 10 may be actuated to automatically maneuver the vehicle 10 along the evasive trajectory 28 to the evasive area 30. The evasive area 30 may be a parking space close by.

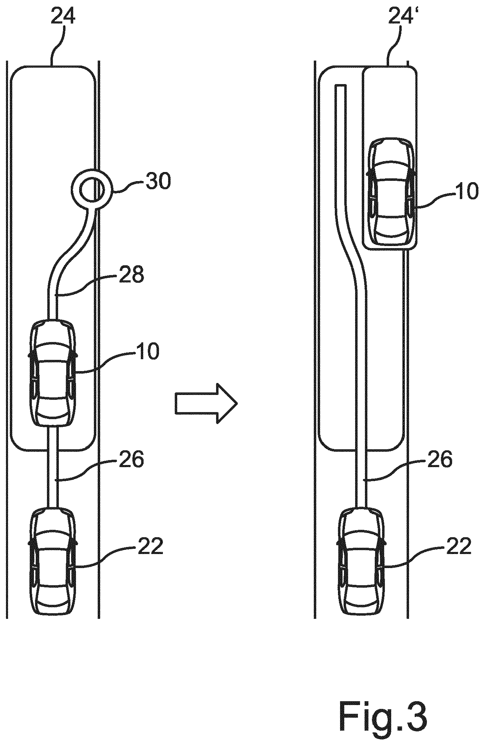

Fig. 3 shows a situation, which is comparable to the situation described in Fig. 2. However, in the scenario according to Fig. 3, no parking space is available for the vehicle 10 to unblock the other vehicle 22. The vehicle 10 may plan an evasive trajectory 28 in order to arrive at an evasive area 30, where it unblocks the vehicle 22, but still may hinder the passage of other vehicles, which may be larger than vehicle 22. Therefore, a smaller conflict area 24' remains even in the evasive area 30.

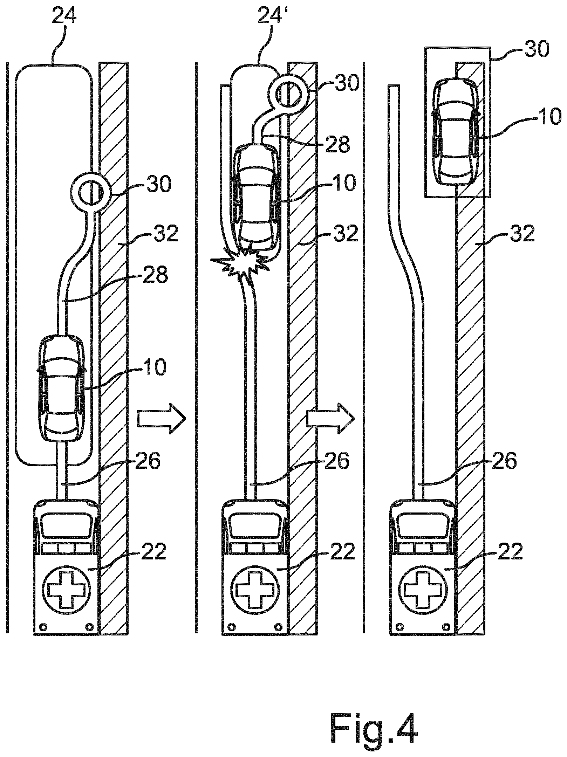

Fig. 4 shows a situation, where a conflict between vehicle 10 and an ambulance 22 is detected. As there is no dedicated parking space nearby to unblock the ambulance 22, the vehicle 10 could try to find an evasive area 30 close to the side of the road, as described with regard to Fig. 3. However, moving to the side of the road is not sufficient in the shown scenario to unblock the road and to let the ambulance 22 pass.

The ambulance 22 has a higher blocking score than the other vehicle 22 as described in Fig. 2 and 3.The vehicle 10 may use the blocking score of the ambulance 22 in order to adapt the new conflict area 24'. The blocking score of the ambulance 22 may allow an evasive maneuver onto a sidewalk 32 of the road. Therefore, the vehicle 10 may plan the evasive trajectory 28 to end on the sidewalk 32.

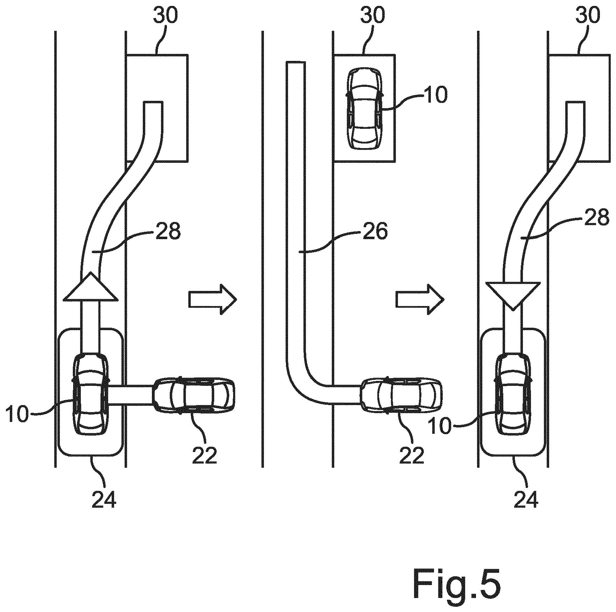

Fig. 5 shows a situation, where the vehicle 10 will return to its original conflict area 24, after having let the other vehicle 22 pass.

In case the vehicle 10 cannot find an evasive area 30 anywhere close to the current conflict area 24, it may also execute a major evasive maneuver, for example a drive once around the block to return to the conflict area 24.

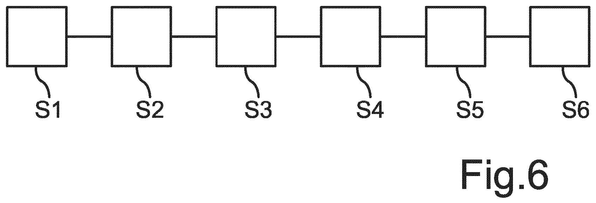

Fig. 6 shows a schematic diagram of a method for operating a driver assistance system 12, comprising a sensor unit 14 with at least one sensor 16, a communication unit 18 and a conflict detection unit 20.

The method comprises as a step S1 the capturing of object data by the at least one sensor 16, wherein the object data describe at least one object 22 within an area surrounding the vehicle 10. In a step S2, the communication unit 18 may receive a communication signal from the at least one object 22, wherein the communication signal describes a planned maneuver 26 of the at least one object 22 in the area surrounding the vehicle 10. In a step S3, the conflict detection unit 20 may define a current conflict area 24 surrounding the vehicle 10, wherein a size and an outline of the current conflict area 24 are defined at least partially based on the object data and/or on the communication signal. In a step S4, the conflict detection unit 20 may detect a potential conflict based on a current position of the at least one object 22 with regard to the current conflict area 24 and/or based on the planned maneuver 26 of the at least one object 22. Upon detection of the potential conflict, an evasive trajectory 28 for the vehicle 10 leading out of the current conflict area 24 to an evasive area 30 may be determined (step S5). In a step S6, control means of the vehicle 10 may be actuated to automatically maneuver the vehicle 10 along the evasive trajectory 28 to the evasive area 30.

In an exemplary situation, a delivery vehicle 10 may park in front of a parking lot access ramp. The driver may exit the vehicle 10 to proceed with their delivery. As the driver is away, the parking lot door opens and a vehicle 22 tries to exit. The delivery vehicle 10 may be equipped with the inventive driver assistant system 12 and detect the situation, start its engine, and maneuver a few meters backwards along an evasive trajectory 28 to free the access. The blocked vehicle 22 may exit the parking lot. Then, the delivery vehicle 10 may move back to its original location.

In another example, for example in a busy parking lot, a vehicle 10 may be stationed in front of other vehicles 22. One of the blocked vehicles 22 may be boarded, and its driver may use the horn to try and raise attention. The ego-vehicle 10 may detect the situation, and move slowly forwards in a straight line 28 to free the passage. Once the parking slot is free, the vehicle 10 may park in it and the driver may be informed of the operation.

The examples show how an efficient method of removing vehicles from blocked passageways can be provided.

## Claims

1. Method for operating a driver assistance system (12) of a motor vehicle (10), the system (12) comprising a sensor unit (14) with at least one sensor (16), a communication unit (18) and a conflict detection unit (20),
the method comprising the steps of
- capturing of object data by the at least one sensor (16), wherein the object data describe at least one object (22) within an area surrounding the vehicle (10), and/or
- receiving of a communication signal from the at least one object (22) by the communication unit (18), wherein the communication signal describes a planned maneuver (26) of the at least one object (22) in the area surrounding the vehicle (10),
- defining a current conflict area (24) surrounding the vehicle (10) by the conflict detection unit (20), wherein a size and an outline of the current conflict area (24) are defined at least partially based on the object data and/or on the communication signal,
- detecting a potential conflict by the conflict detection unit (20) based on a current position of the at least one object (22) with regard to the current conflict area (24) and/or based on the planned maneuver (26) of the at least one object (22), wherein upon detection of the potential conflict, an evasive trajectory (28) for the vehicle (10) leading out of the current conflict area (24) to an evasive area (30) is determined and control means of the vehicle (10) are actuated to maneuver the vehicle (10) along the evasive trajectory (28) to the evasive area (30), **characterized in that** the object data and/or the communication signal comprise an urgency information, which describes a level of urgency associated with the at least one object (22), wherein a blocking score is assigned to the at least one object (22) at least partially based on the level of urgency, and wherein the size and outline of the current conflict area (24) are adapted to the blocking score.

2. Method according to claim 1, wherein the current conflict area (24) and/or the evasive area (30) are defined at least partially based on map data, which describe the surrounding area of the vehicle (10).

3. Method according to claim 1 or 2, wherein the blocking score is determined at least partially based on the planned maneuver (26) of the at least one object (22).

4. Method according to any of claims 1 to 3, wherein the driver assistance system (12) determines the evasive trajectory (28) and/or the evasive area (30) at least partially based on the blocking score.

5. Method according to any one of the preceding claims, wherein the at least one object (22) is another traffic participant and/or an infrastructure component.

6. Method according to any one of the preceding claims, wherein the driver assistance system (12) transmits a message to an external communication device about the maneuver along the evasive trajectory (28).

7. Method according to any one of the preceding claims, wherein the driver assistance system (12) triggers the definition of the current conflict area (24) only after the vehicle (10) has completed a parking maneuver and/or only after a driver has left the vehicle (10).

8. Driver assistance system (12) comprising a sensor unit (14) with at least one sensor (16), a communication unit (18) and a conflict detection unit (20), wherein the system (12) is designed to be operated according to a method according to any one of the preceding claims.

9. Vehicle (10) comprising a driver assistance system (12) according to claim 8.

## Patentansprüche

1. Verfahren zum Betreiben eines Fahrerassistenzsystems (12) eines Kraftfahrzeugs (10), wobei das System (12) eine Sensoreinheit (14) mit mindestens einem Sensor (16), eine Kommunikationseinheit (18) und eine Konflikterkennungseinheit (20) umfasst, wobei das Verfahren die folgenden Schritte umfasst:
- Erfassen von Objektdaten durch den mindestens einen Sensor (16), wobei die Objektdaten mindestens ein Objekt (22) innerhalb eines Bereichs beschreiben, der das Fahrzeug (10) umgibt, und/oder
- Empfangen eines Kommunikationssignals von dem mindestens einen Objekt (22) durch die Kommunikationseinheit (18), wobei das Kommunikationssignal ein geplantes Manöver (26) des mindestens einen Objekts (22) in dem das Fahrzeug (10) umgebenden Bereich beschreibt,
- Definieren eines aktuellen Konfliktbereichs (24), der das Fahrzeug (10) umgibt, durch die Konflikterkennungseinheit (20), wobei eine Größe und ein Umriss des aktuellen Konfliktbereichs (24) zumindest teilweise auf der Grundlage der Objektdaten und/oder des Kommunikationssignals definiert werden,
- Erkennen eines potenziellen Konflikts durch die Konflikterkennungseinheit (20) auf der Grundlage einer aktuellen Position des mindestens einen Objekts (22) in Bezug auf den aktuellen Konfliktbereich (24) und/oder auf der Grundlage des geplanten Manövers (26) des mindestens einen Objekts (22), wobei bei Erkennung des potenziellen Konflikts eine Ausweichtrajektorie (28) für das Fahrzeug (10), die aus dem aktuellen Konfliktbereich (24) zu einem Ausweichbereich (30) führt, bestimmt wird und Steuerungsmittel des Fahrzeugs (10) betätigt werden, um das Fahrzeug (10) entlang der Ausweichtrajektorie (28) zu dem Ausweichbereich (30) zu manövrieren, **dadurch gekennzeichnet, dass** die Objektdaten und/oder das Kommunikationssignal eine Dringlichkeitsinformation umfassen, die ein mit dem mindestens einen Objekt (22) verbundenes Dringlichkeitsniveau beschreibt, wobei dem mindestens einen Objekt (22) zumindest teilweise auf der Grundlage des Dringlichkeitsniveaus ein Blockierungswert zugewiesen wird und wobei die Größe und der Umriss des aktuellen Konfliktbereichs (24) an den Blockierungswert angepasst werden.

2. Verfahren nach Anspruch 1, wobei der aktuelle Konfliktbereich (24) und/oder der Ausweichbereich (30) zumindest teilweise auf der Grundlage von Kartendaten definiert werden, die den das Fahrzeug (10) umgebenden Bereich beschreiben.

3. Verfahren nach Anspruch 1 oder 2, wobei der Blockierungswert zumindest teilweise auf der Grundlage des geplanten Manövers (26) des mindestens einen Objekts (22) bestimmt wird.

4. Verfahren nach einem der Ansprüche 1 bis 3, wobei das Fahrerassistenzsystem (12) die Ausweichtrajektorie (28) und/oder den Ausweichbereich (30) zumindest teilweise auf der Grundlage des Blockierungswerts bestimmt.

5. Verfahren nach einem der vorhergehenden Ansprüche, wobei das mindestens eine Objekt (22) ein anderer Verkehrsteilnehmer und/oder eine Infrastrukturkomponente ist.

6. Verfahren nach einem der vorhergehenden Ansprüche, wobei das Fahrerassistenzsystem (12) eine Nachricht über das Manöver entlang der Ausweichtrajektorie (28) an ein externes Kommunikationsgerät übermittelt.

7. Verfahren nach einem der vorhergehenden Ansprüche, wobei das Fahrerassistenzsystem (12) die Definition des aktuellen Konfliktbereichs (24) erst auslöst, nachdem das Fahrzeug (10) ein Parkmanöver abgeschlossen hat und/oder erst nachdem ein Fahrer das Fahrzeug (10) verlassen hat.

8. Fahrerassistenzsystem (12), umfassend eine Sensoreinheit (14) mit mindestens einem Sensor (16), eine Kommunikationseinheit (18) und eine Konflikterkennungseinheit (20), wobei das System (12) dazu ausgelegt ist, gemäß einem Verfahren nach einem der vorhergehenden Ansprüche betrieben zu werden.

9. Fahrzeug (10), umfassend ein Fahrerassistenzsystem (12) nach Anspruch 8.

## Revendications

1. Procédé de fonctionnement d'un système d'aide à la conduite (12) d'un véhicule automobile (10), le système (12) comprenant une unité de capteurs (14) avec au moins un capteur (16), une unité de communication (18) et une unité de détection de conflits (20), le procédé comprenant les étapes suivantes :
- capture de données d'objet par le au moins un capteur (16), dans laquelle les données d'objet décrivent au moins un objet (22) dans une zone entourant le véhicule (10), et/ou
- réception d'un signal de communication provenant du au moins un objet (22) par l'unité de communication (18), dans laquelle le signal de communication décrit une manœuvre planifiée (26) du au moins un objet (22) dans la zone entourant le véhicule (10),
- définition d'une zone de conflit actuelle (24) entourant le véhicule (10) par l'unité de détection de conflits (20), dans laquelle une taille et un contour de la zone de conflit actuelle (24) sont définis au moins partiellement sur la base des données d'objet et/ou du signal de communication,
- détection d'un conflit potentiel par l'unité de détection de conflits (20) sur la base d'une position actuelle du au moins un objet (22) par rapport à la zone de conflit actuelle (24) et/ou sur la base de la manœuvre planifiée (26) du au moins un objet (22), dans laquelle, lors de la détection du conflit potentiel, une trajectoire d'évitement (28) pour le véhicule (10) menant hors de la zone de conflit actuelle (24) vers une zone d'évitement (30) est déterminée et des moyens de commande du véhicule (10) sont actionnés pour manœuvrer le véhicule (10) le long de la trajectoire d'évitement (28) vers la zone d'évitement (30), **caractérisé en ce que** les données d'objet et/ou le signal de communication comprennent une information d'urgence, qui décrit un niveau d'urgence associé au au moins un objet (22), dans lequel un score de blocage est attribué au au moins un objet (22) au moins partiellement sur la base du niveau d'urgence, et dans lequel la taille et le contour de la zone de conflit actuelle (24) sont adaptés au score de blocage.

2. Procédé selon la revendication 1, dans lequel la zone de conflit actuelle (24) et/ou la zone d'évitement (30) sont définies au moins partiellement sur la base de données cartographiques, qui décrivent la zone environnante du véhicule (10).

3. Procédé selon la revendication 1 ou 2, dans lequel le score de blocage est déterminé au moins partiellement sur la base de la manœuvre planifiée (26) du au moins un objet (22).

4. Procédé selon l'une quelconque des revendications 1 à 3, dans lequel le système d'aide à la conduite (12) détermine la trajectoire d'évitement (28) et/ou la zone d'évitement (30) au moins partiellement sur la base du score de blocage.

5. Procédé selon l'une quelconque des revendications précédentes, dans lequel le au moins un objet (22) est un autre participant à la circulation et/ou un composant d'infrastructure.

6. Procédé selon l'une quelconque des revendications précédentes, dans lequel le système d'aide à la conduite (12) transmet un message à un dispositif de communication externe concernant la manœuvre le long de la trajectoire d'évitement (28).

7. Procédé selon l'une quelconque des revendications précédentes, dans lequel le système d'aide à la conduite (12) déclenche la définition de la zone de conflit actuelle (24) uniquement après que le véhicule (10) a effectué une manœuvre de stationnement et/ou uniquement après qu'un conducteur a quitté le véhicule (10).

8. Système d'aide à la conduite (12) comprenant une unité de capteurs (14) avec au moins un capteur (16), une unité de communication (18) et une unité de détection de conflits (20), dans lequel le système (12) est conçu pour être exploité selon un procédé selon l'une quelconque des revendications précédentes.

9. Véhicule (10) comprenant un système d'aide à la conduite (12) selon la revendication 8.
